# EUROPEAN PATENT APPLICATION

(11) **EP 4 694 276 A1**
(43) Date of publication of application: **11.02.2026**
(21) Application number: 24382900.9
(22) Date of filing: 09.08.2024
(51) Int. Cl.: H04W 24/00, H04W 88/18

(54) **NETWORK SLICE CONFIGURATION**

(71) Applicant: Vodafone Group Services Limited, Newbury, Berkshire RG14 2FN (GB)
(72) Inventor: POZO, Sergio, LONDON, W2 6BY (GB); SABATER, Susana Maria, LONDON, W2 6BY (GB)
(74) Representative: Boult Wade Tennant LLP

(57) **Abstract**

A Network Slice is configured by a Network Slice Provider (NSP) in a telecommunications network, in particular at a telecommunications network management system of the NSP. The NSP receives, as part of a service profile message from a Network Slice Consumer (NSC), an indication of a minimum amount of renewable energy to be used for realisation of the Network Slice. The NSP determines feasibility of the indicated minimum amount of renewable energy to realise the Network Slice, based on information of renewable energy consumption in respect of a plurality of data centres with which the Network Slice can be realised.

## Description

### Technical Field of the Disclosure

The disclosure concerns configuring a Network Slice by a Network Slice Provider (NSP) in a telecommunications network, for example by a telecommunications network management system.

### Background to the Disclosure

The Third Generation Partnership Project (3GPP) has specified 5G cellular network technologies, including Network Slicing. A Network Slice may be considered as a logical network that provides specific network capabilities and network characteristics, supporting various service properties for a Network Slice Consumer (NSC), for example an enterprise. As part of the network slice provision process, the NSC indicates to the Network Slice Provider (NSP) several parameters, for example the maximum number of Packet Data Unit (PDU) sessions, latency, coverage area, etc.

A draft 3GPP Technical Report (TR) 28.880 v.0.3.0, studies energy efficiency and energy saving aspects of 5G networks and services. In section 5.3.1 of this document, there is a suggestion to include renewable energy reporting as part of 5G systems: "Due to the highly variable and unpredictable nature of renewable energy sources, the supply of renewable energy varies substantially by time and location. There is a need for the 3GPP management system to report the energy consumption metrics along with the type of consumed energy and carbon emission information, for example:
- Network slice customers may request some minimal amount/ratio for renewable energy to be used for the slice realization, and hence the network slice provider needs to have a means to monitor and report on the energy consumption for different energy types.
- Awareness of energy consumption of different energy types is useful for energy type aware network management, e.g., defining energy saving policies such that the consumption of renewable energy can be favoured."

Other proposals concerning renewable energy usage in 5G networks have also been made in the 3GPP SA5 Working Group compiling TR 28.880. For example, S5-243240 and S5-243241 consider cases in which a User Equipment (UE) may be in an area of coverage overlapping between two base stations that use different amounts of renewable energy. These proposals do not consider the provision of a Network Slice, however. Moreover, such scenarios need not be limited to cellular networks and may extend to other (wireless) telecommunications networks, where the use of renewable energy is increasingly desirable.

### Summary of the Disclosure

Against this background, the present disclosure provides a method for configuring a Network Slice by a Network Slice Provider (NSP) in a telecommunications network according to claim 1 and a telecommunications network management system as defined by claim 12. Other preferred features are disclosed with reference to the claims and in the description below.

A Network Slice Consumer (NSC) communicates a service profile (ServiceProfile) message to a NSP as part of the Network Slice provisioning process (for example, as already defined in 3GPP TS 28.531 v18.6.1 and TS 28.541 v19.0.0). In this context, communication involves the NSP sending the message and/or the NSC receiving the message. As part of this message, a minimum amount of renewable energy to be used for realisation of the Network Slice is indicated. The NSP has information about the renewable energy consumption of multiple data centres with which the Network Slice can be realised. It uses this information to determine a feasibility of the indicated minimum amount of renewable energy to realise the Network Slice. Such approaches may be implemented at a telecommunications network management system.

By determining feasibility of achieving the renewable energy target at the NSP, energy consumption targets for the Network Slice can more readily be achieved. Rather than just monitoring and reporting on the energy consumption, the NSP can establish how to appropriately source energy for Network Slice provisioning in specific cases.

Typically, the minimum amount of renewable energy indication and/or the information of renewable energy consumption includes a proportion of total energy that is renewable, but in principle, other indications are possible, for example an absolute amount of energy that is renewable. Preferably, the determined feasibility is communicated from the NSP to the NSC. This may permit improved Network Slice decisions.

Advantageously, the NSP can identify a specific data centre (or data centres) for realisation of the Network Slice to achieve the indicated minimum amount of renewable energy and then configure the Network Slice to use the identified data centre (or data centres), for instance by deploying Network Functions at the identified data centres. Thus, the NSP can beneficially realise the Network Slice to meet these energy efficiency targets.

The information about renewable energy consumption can additionally (or alternatively) indicate whether the renewable energy is grid sourced and/or locally sourced (and optionally, the proportions or absolute amounts of each). In this case, data centres grid sourced renewable energy or locally sourced renewable energy is consumed may be preferred.

It will be understood that the feasibility can also be based on criteria other than the renewable energy consumption of the data centre (or centres). Such criteria may be communicated in the service profile message. For example, these criteria may relate to one or more of: Quality of Service (QoS), for instance one or more of bandwidth, latency, throughput or error rate; a communication service characteristic, for example including one or more of service type, UE mobility level, density of users, traffic density, a maximum number of Packet Data Unit (PDU) sessions and coverage area; and capacity, for example, a (maximum) number of User Equipment, UE, for use with the Network Slice and/or computing resources. As a result, renewable energy can be used together with other criteria for optimisation of Network Slice provision.

The NSP may obtain the information about data centre renewable energy consumption externally, for instance for the data centre. This may be done repeatedly (for example, at intervals) and/or dynamically. In this way, the NSP may implement and/or update the Network Slice provision in accordance with current data.

Although this approach may be applied to any telecommunications network, it is beneficially applicable to a cellular network. Then, each data centre may be a Core Network data centre.

All aspects may be implemented as a computer program and/or as a device or system (for instance, a telecommunications or cellular network management system). A network entity within such a system may also be considered.

### Brief Description of the Drawings

The approach of the disclosure may be put into practice in various ways, one of which will now be described by way of example only and with reference to the accompanying drawings in which:
Figure 1 shows a flowchart of an example process for configuring a Network Slice in accordance with the disclosure; and
Figure 2 depicts message flows for configuring a Network Slice in accordance with the disclosure.

### Detailed Description of Preferred Embodiments

In some aspects, the present disclosure builds on the procedures discussed in 3GPP TS 28.531 v18.6.1 and TS 28.541 v19.0.0. Annex A of TS 28.531 explains Network Slice provisioning in a general sense. For example, an initial step in Network Slice provisioning involves a Network Slice Consumer (NSC) communicating a request for a Network Slice to a NSP. As part of this request, the NSC indicates a service profile (in 3GPP standards, this message is termed "ServiceProfile"), which includes a range of parameters. Example parameters are discussed in section 4.3 of TS 28.531, noting "Capability model information, which describes the capability including supported communication service characteristic information (e.g. service type, UE mobility level, density of users, traffic density), QoS attributes (e.g. bandwidth, latency, throughput and so on) and capacity (e.g. maximum number of UEs), can be exposed to CSC" (Communication Service Customer).

In addition, TS 28.531 section 5.1.6 discusses a "Network slice feasibility check". In this procedure, the Network Slice Provider (NSP), and more specifically a network management system operated by the NSP, determines whether the network slice requirements can be satisfied and optionally reserves resources to satisfy the network slice requirements. This is explained further in section 7.13 of the document. In this process, the parameters communicated in the service profile are checked against a state of the network and data centres providing the Network Slice service.

In addition to these existing parameters, the present disclosure proposes an additional parameter. This indicates use of one or more data centres that consume renewable energy, specifically a minimum amount (which is typically expressed as a percentage). As suggested in TR 28.880 v.0.3.0, section 5.3.1, the use of renewable energy by each data centre may be reported to the network management system.

The network management system advantageously stores this information in an inventory associated with it. For example, each data centre listed in the inventory has a unique identifier and associated with the identifier may be a label indicating that renewable energy is used. Moreover, a further label may indicate the amount of renewable energy under contract (as an absolute amount and/or as a percentage of total usage). Advantageously, a label may also indicate the origin of the renewable energy consumed, for example whether any is locally (internally) generated and/or whether any comes from the electricity grid (externally). The respective proportions and/or amounts of energy consumed from these sources could also be indicated. For instance, the inventory may store this information in the format <country.city.number of data centre within the city.percentage of renewable energy_internally generated/externally generated>.

The new renewable energy parameter in the service profile message (ServiceProfile) allows the NSC to indicate that the requested Network Slice should be deployed, if possible, in data centres supplied with a specific minimum percentage of renewable energy. It is envisaged that this parameter should only apply to Core Network data centres, but this is not essential.

The requirements in ServiceProfile are data types with a defined structure. The new parameter could therefore have a new data type included in the ServiceProfile data type with the following characteristics (see, for example, 3GPP TS 32.156 v18.6.0, section 5.2.1 for details about the data type attributes):

| **Attribute name** | **S** | **isReadable** | **isWritable** | **isInvariant** | **isNotifyable** |
|---|---|---|---|---|---|
| RenewableEnergy | M | T | F | T | T |

The RenewableEnergy data type may have the following structure:

| **Attribute name** | **S** | **isReadable** | **isWritable** | **isInvariant** | **isNotifyable** |
|---|---|---|---|---|---|
| RenewableEnergyRequired | M | T | F | T | T |
| Percentage | M | T | F | T | T |

Based on the data received in the ServiceProfile message from the NSC, the network management system of the NSP can check the inventory. The network management system looks for a suitable data centre (or data centres) to deploy the slice, considering the resource availability at each data centre and comparison of its characteristics with the requirements indicated in the ServiceProfile message.

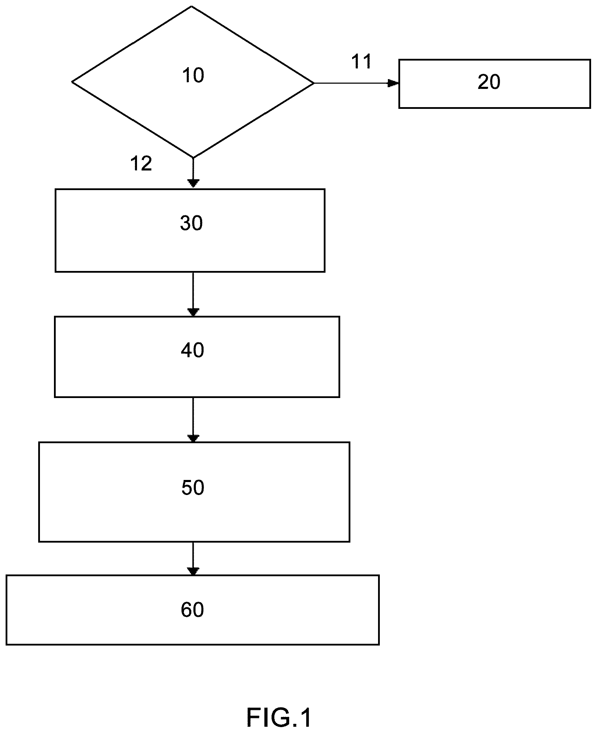

Referring now to Figure 1, there is shown a flowchart of an example process for configuring a Network Slice in accordance with the disclosure. This flowchart explains a workflow for taking the new renewable energy parameter (and associated information) into account at the network management system of the NSP. In a first decision step 10, it is established whether renewable energy is required. If not, first path 11 is taken and then a normal Network Slice deployment process 20 is followed.

If renewable energy is required, second path 12 is taken and in a beneficial quantitative analysis step 30, it is determined which data centres are supplied with at least the percentage of renewable energy specified in the ServiceProfile message. Then, a data centre identification step 40 is performed, in which at least one data centre from those determined in the quantitative analysis step 30 is identified as having sufficient available resources to provide the Network Slice. A specific criteria step 50 is optionally next performed, in which the at least one identified data centre is evaluated against specific criteria, for example as to whether the renewable energy is sourced locally (internally), for example from solar panels at the data centre or from the electricity grid (externally). Locally sourced renewable energy may be preferred (although one or more non-preferred data centres may be considered if no or insufficient preferred data centres are identified).

As a result, at least one data centre is selected for providing the Network Slice. Alternatively, it is determined that the renewable energy parameter requirements from the ServiceProfile message are not feasible. This feasibility analysis and messaging will be discussed further below. If the renewable energy parameter requirements from the ServiceProfile message are feasible, a network function provisioning step 60 reserves and/or deploys network functions in the selected data centre (or data centres).

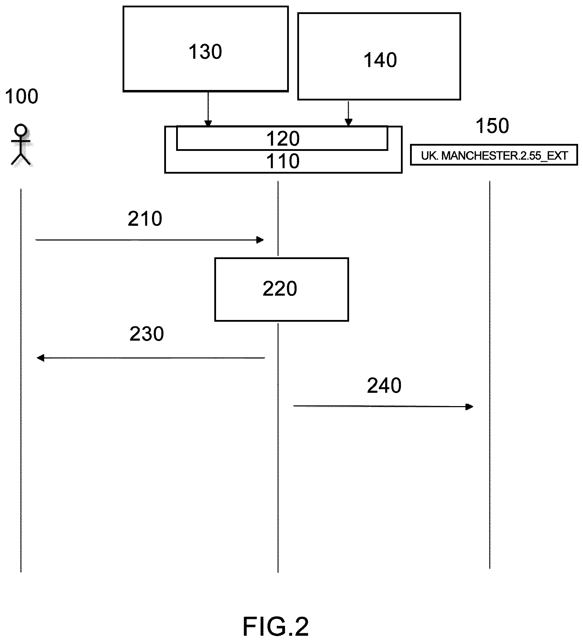

Referring next to Figure 2, there are depicted message flows for configuring a Network Slice in accordance with the disclosure. The message flows are between: a NDC 100; a network management system 110 (as part of the NSP), comprising an inventory 120; and a data centre 150. It can be seen schematically that the inventory 120 obtains a list of data centres and their renewable energy characteristics 130 (whether renewable energy is used, preferably what percentage is renewable and more preferably where the renewable energy is sourced), as discussed above and a network functions virtualization infrastructure (NFVI) update 140 on available computing resources per data centre. It should be noted that the inventory 120 can obtain this information in a variety of ways, including receiving the data from external sources or having a stored database. An example data centre identifier and label is shown in the format discussed above, specifically: "UK.MANCHESTER.2.55_EXT", indicating the data centre as located in Manchester, UK, being number 2 data centre in that location and consuming 55% renewable energy that is externally sourced.

The NSC 100 sends a Network Slice request 210 to the network management system 110. This includes a service profile message comprising the renewable energy parameter, as discussed above. The network management system 110 performs a check 220 of data centres to match the target renewable energy parameter and resource availability, for example as explained with reference to Figure 1 above. This is typically part of the normal feasibility check of a network slice (and not a separate feasibility checking process). Once the check 220 has determined the feasibility, including the feasibility to achieve the target renewable energy parameter and resource availability in the Network Slice deployment, the network management system 110 sends a feasibility message 230, indicating the determined feasibility to the NSC 110. If the requested Network Slice is feasible, the network management system 110 performs a Core Network Network Slice Subnet deployment 240, by communicating with the data centre 140.

The feasibility message 230 is advantageously based on the process described in 3GPP TS 28.531 v18.6.1, section 7.13 as part of the Provisioning Procedures. Step number 7 of this section notes:
"7) NS MnS Provider sends the final notification with the feasibility check and reservation status (including feasibilityResult, inFeasibleReason, resourceReservationStatus, **reservationFailureReason,** reservation Expiration and **recommendedRequirements** of FeasibilityCheckAndReservationJob IOC in TS 28.541 [6])."

The reservationFailureReason and recommendedRequirements elements are specified in 3GPP TS 28.541 v19.0.0, section 6.4.1:

| | | |
|---|---|---|
| reservationFailureReason | An attribute that specifies the additional reason information if the reservation is failed. This attribute can be absent if the reservation is successful. | type: ENUM |
| | | multiplicity: 0..1 |
| | | isOrdered: N/A |
| | | isUnique: N/A |
| | Allowed Value: the detailed content | defaultValue: None |
| | (ENUM Value) for the reservationFailureReason is not defined in the present document. | allowedValues: N/A |
| | | isNullable: False |

| | | |
|---|---|---|
| recommendedRequirements | **An attribute which specifies the recommended network slicing related requirements (i.e. ServiceProfile and SliceProfile information) which can be supported by the MnS producer. This information is provided when the feasibility check result is infeasible. This information can be used by MnS consumer to adjust the network slicing related requirements.** | type: String |
| | | multiplicity: 1 |
| | | isOrdered: N/A |
| | | isUnique: N/A |
| | | defaultValue: |
| | | None |
| | | isNullable: False |

In a general sense, there may be considered a method for configuring a Network Slice by a NSP in a telecommunications network, the method comprising: receiving, at the NSP, as part of a service profile message from a NSC an indication of a minimum amount of renewable energy to be used for realisation of the Network Slice; and determining, at the NSP, feasibility of the indicated minimum amount of renewable energy to realise the Network Slice, based on information of renewable energy consumption in respect of a plurality of data centres with which the Network Slice can be realised. A telecommunications network management system of a NSP may be configured to implement this method (and any disclosed herein). In this way, the telecommunications network management system may configure a Network Slice. Optionally, any method described herein may be implemented as a computer program, comprising instructions that are configured when executed by a processor to perform the method (for example, by control of a telecommunications network management system).

Optionally, one or more data centres from the plurality of data centres are identified at the NSP, for realisation of the Network Slice, such that the identified data centres meet the indicated minimum amount of renewable energy. Then, the Network Slice may be configured to use the identified data centres (for example, by deployment of network functions of the Network Slice at the identified data centres).

In embodiments, the information of renewable energy consumption in respect of the plurality of data centres further comprises information about provision of grid sourced and/or locally sourced renewable energy at each of the plurality of data centres. Then, the step of identifying beneficially further comprises preferring data centres from the plurality of data centres where locally (internally) sourced renewable energy is consumed.

Advantageously, the determined feasibility is communicated from the NSP to the NSC.

In some embodiments, the step of determining is further based on a requirement for the Network Slice and/or a provision ability for each of the plurality of data centres in respect of one or more parameters of Quality of Service (QoS), communication service characteristic or capacity. For example, the at least one parameter comprises one or more of: coverage area; throughput; maximum number of Packet Data Unit (PDU) sessions; latency; error rate; number of UE for use with the Network Slice; service type; UE mobility level; density of users; traffic density; and computing resources.

Optionally, the information of renewable energy consumption in respect of the plurality of data centres with which the Network Slice can be realised is received at the NSP. Beneficially, the step of receiving is performed repeatedly and/or dynamically.

In embodiments, the indication of a minimum amount of renewable energy to be used for realisation of the Network Slice and/or the information of renewable energy consumption comprises a proportion of total energy that is renewable. Additionally or alternatively, the indication of a minimum amount of renewable energy to be used for realisation of the Network Slice and/or the information of renewable energy consumption comprises an absolute amount of energy that is renewable.

It will be understood that, in preferred embodiments, the telecommunications network is a cellular network. Then, the plurality of data centres are (or comprise) Core Network data centres. However, other types of telecommunications network may be covered, including wireless telecommunications networks, for example, wireless Local Area Network (LAN) systems.

Any of the methods described herein may be implemented as a computer program. The computer program may be configured to control a mobile station (MS), UE and/or a network node or entity (for instance, a network management system) to perform any method according to the disclosure. A server or network node of a telecommunications network may also be provided, configured to operate in accordance with certain methods disclosed herein. For example, the server or network node may include a processor and at least one communication interface, particularly comprising one or both of a transmitter and receiver. Any UE may likewise include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. It will also be appreciated that changes to the specific messaging and message content are possible, including omission of message or specific content. The order of steps may also be altered, especially where the same end result will be achieved (this may especially apply in feasibility checks). Feasibility messages need not be sent, as appropriate. Although the network management system is explained as carrying out significant functionality, this system may be implemented in a distributed manner and/or certain steps may be taken by other network elements. The advantageous example of a cellular network has been considered herein, but it will be recognised that the same approach can be applied to other telecommunications networks. Also, combinations of any specific features shown with reference to one embodiment (or aspect) or with reference to multiple embodiments (or aspects) are also provided, even if that combination has not been explicitly detailed herein.

## Claims

1. A method for configuring a Network Slice by a Network Slice Provider, NSP, in a telecommunications network, the method comprising:
receiving, at the NSP, as part of a service profile message from a Network Slice Consumer, NSC, an indication of a minimum amount of renewable energy to be used for realisation of the Network Slice; and
determining, at the NSP, feasibility of the indicated minimum amount of renewable energy to realise the Network Slice, based on information of renewable energy consumption in respect of a plurality of data centres with which the Network Slice can be realised.

2. The method of claim 1, further comprising:
identifying, at the NSP, one or more data centres from the plurality of data centres, for realisation of the Network Slice, such that the identified data centres meet the indicated minimum amount of renewable energy;
configuring the Network Slice to use the identified data centres.

3. The method of claim 2, wherein the information of renewable energy consumption in respect of the plurality of data centres further comprises information about provision of grid sourced and/or locally sourced renewable energy at each of the plurality of data centres and wherein the step of identifying further comprises preferring data centres from the plurality of data centres where locally sourced renewable energy is consumed.

4. The method of claim 2 or claim 3, wherein configuring the Network Slice comprises deploying Network Functions of the Network Slice at the identified data centres.

5. The method of any preceding claim, further comprising:
communicating the determined feasibility from the NSP to the NSC.

6. The method of any preceding claim, wherein the step of determining is further based on a requirement for the Network Slice and/or a provision ability for each of the plurality of data centres in respect of one or more parameters of Quality of Service (QoS), communication service characteristic or capacity.

7. The method of claim 6, wherein the at least one parameter comprises one or more of: coverage area; throughput; maximum number of Packet Data Unit, PDU, sessions; latency; error rate; number of User Equipment, UE, for use with the Network Slice; service type; UE mobility level; density of users; traffic density; and computing resources.

8. The method of any preceding claim, further comprising:
receiving, at the NSP, the information of renewable energy consumption in respect of the plurality of data centres with which the Network Slice can be realised.

9. The method of claim 6, wherein the step of receiving is performed repeatedly and/or dynamically.

10. The method of any preceding claim, wherein the indication of a minimum amount of renewable energy to be used for realisation of the Network Slice and/or the information of renewable energy consumption comprises a proportion of total energy that is renewable or an absolute amount of energy that is renewable.

11. The method of any preceding claim, wherein the telecommunications network is a cellular network and the plurality of data centres are Core Network data centres.

12. A telecommunications network management system of a Network Slice Provider, NSP, for configuring a Network Slice, the telecommunications network management system being configured to perform the method of any preceding claim.
